# EUROPÄISCHE PATENTSCHRIFT

(11) **EP 2 829 779 B1**
(45) Veröffentlichungstag und Bekanntmachung des Hinweises auf die Patenterteilung: **21.03.2018**
(21) Anmeldenummer: 13177468.9
(22) Anmeldetag: 22.07.2013
(51) Int. Cl.: F16K 31/524, F16K 11/074, F16K 21/04

(54) **Ventiloberteil**
Valve top
Partie supérieure de soupape

(43) Veröffentlichungstag der Anmeldung: 28.01.2015
(73) Patentinhaber: Flühs Drehtechnik GmbH, 58515 Lüdenscheid (DE)
(72) Erfinder: Thurau,Friedrich, 58849 Herscheid (DE)
(74) Vertreter: Patentanwälte Dörner & Kötter PartG mbB

(56) Entgegenhaltungen:
- EP-A1- 0 424 782
- DE-C- 693 636
- US-A- 1 365 694
- US-A- 2 606 450
- US-A- 3 780 758

## Beschreibung

Die Erfindung betrifft ein Ventiloberteil mit einem Kopfstück, dass von einer Spindel mittig durchsetzt ist, die in dem Kopfstück um ihre Längsachse drehbar gelagert ist und über die ein Ventilkörper bewegbar ist.

Mit Hilfe von Ventiloberteilen wird der Austritt von Medien aus Armaturen gesteuert. Zu diesem Zweck wird das Ventiloberteil mittels seines Kopfstücks in das Gehäuse einer Armatur geschraubt. Auf seine Spindel wird ein Drehgriff oder Hebel gesteckt. Bei bekannten Ventiloberteilen (vgl. DE 32 07 895 C2) sind jeweils zwei Scheiben zur Steuerung des Durchflusses vorgesehen. Die Scheiben sind aus keramischen Material hergestellt. Eine der beiden Scheiben - Steuerscheibe - ist mit Hilfe eines mit der Spindel in Verbindung stehender Mitnehmers drehbar in dem Ventiloberteil angeordnet. Die andere Scheibe - Einlassscheibe - ist eine feste Ventilsitzscheibe, auch als Festscheibe bezeichnet. Bei Drehung der Steuerscheibe gleiten die Scheiben aneinander. Auf der dem Ventilsitz der Armatur zugewandten Seite ist eine Dichtung angeordnet, die an der Einlassscheibe anliegt. Die Dichtung überragt die Stirnfläche des Ventiloberteils. Sie dient zur Abdichtung sowohl zur Einlassscheibe als auch zum Ventil der Armatur.

Ventiloberteile werden häufig auch als Mehrwegventil ausgeführt. Hierbei wird jeweils nur einer von mehreren, insbesondere von zwei Zuläufen durch den Ventilkörper freigegeben, sodass wahlweise beispielsweise "nur Kaltwasser" oder "nur Warmwasser" entnommen werden kann. Darüber hinaus ist eine definierte Position "ganz geschlossen" vorgesehen. Zur Reduzierung der abgegebenen Wassermenge, insbesondere auch im Falle der Abgabe von heißem Wasser ist es wünschenswert, dass der Ventilkörper nach dessen Bedienung selbsttätig in die Position "ganz geschlossen" zurückbewegt wird.

Hier setzt die vorliegende Erfindung an. Der Erfindung liegt die Aufgabe zugrunde, ein Ventiloberteil bereitzustellen, dass nach Betätigung des Ventilkörpers zur Entnahme eines Fluids aus wenigstens einem Zulauf selbsttätig in die Position "ganz geschlossen" verfährt. Gemäß der Erfindung wird diese Aufgabe durch ein Ventiloberteil mit den Merkmalen des kennzeichnenden Teils des Patentanspruchs 1 gelöst.

Mit der Erfindung ist ein Ventiloberteil geschaffen, dass nach Betätigung des Ventilkörpers zur Entnahme eines Fluids aus zumindest einem Zulauf selbsttätig in die Position "ganz geschlossen" verfährt.

In Weiterbildung der Erfindung ist die Steuerhülse mit der Spindel über einen Formschluss axial verschiebbar verbunden. Hierdurch ist ein Verschieben der Steuerhülse entlang der Steuerkontur des Kopfstücks bei gleichzeitiger Übertragung eines Drehmoments auf die Spindel ermöglicht.

In Ausgestaltung der Erfindung weist die Steuerhülse eine unrunde, insbesondere mehrkantförmige oder auch polygonförmige axiale Durchführung auf, durch die ein an der Spindel angeordneter unrunder, insbesondere mehrkantförmiger oder auch polygoner Abschnitt hindurch tritt. Dabei ist die Steuerhülse bevorzugt über eine Feder gegen das Kopfstück vorgespannt. Hierdurch ist ein kontinuierlicher Kontakt zwischen Steuerhülse und Steuerkontur des Kopfstücks erzielt.

In Weiterbildung der Erfindung weist die Steuerhülse wenigstens eine schräge Führungskante auf, die an einer Führungsschräge der Steuerkontur anliegt, derart, dass bei Drehung der Steuerhülse in eine definierte Richtung eine axiale Verschiebung der Steuerhülse entgegen der Vorspannung der Feder erfolgt. Hierdurch ist eine Erhöhung der Rückstellkraft der Feder bei Drehung der Spindel und damit der Steuerhülse erzielt, welche im Anschluss an die Betätigung nach Loslassen der Spindel eine Rückstellung der Position der Steuerhülse und damit der Spindel in die Ausgangsposition "ganz geschlossen" bewirkt. Unter einer "schrägen Führungskante" ist vorliegend eine eine Auflagefläche aufweisende Kante zu verstehen, die in ihrem Verlauf eine Steigung aufweist, wobei die Steigung nicht linear erfolgen muss. Der Begriff "Führungskante" ist im Folgenden mit dem Begriff "Führungsschräge" gleich zu setzen. Die unterschiedlichen Begriffe werden lediglich zur besseren Zuordnung zur Steuerkontur bzw. zur Steuerhülse gewählt.

In Weiterbildung der Erfindung weist die Steuerhülse wenigstens zwei in entgegengesetzter Richtung ansteigende schräge Führungskanten auf, die an zwei in entgegengesetzten Richtungen steigende Führungsschrägen der Steuerkontur anliegen, derart, dass bei Rotation der Steuerhülse in eine beliebige Richtung eine axiale Verschiebung der Steuerhülse entgegen der Vorspannung der Feder bewirkt ist. Hierdurch ist eine selbsttätige Rückstellung des Ventilkörpers in die Position "ganz geschlossen" aus beiden Öffnungspositionen (beispielsweise "nur Kaltwasser" bzw. "nur Warmwasser") bewirkt.

In einer anderen Ausgestaltung der Erfindung weist die Steuerkontur benachbart der wenigstens einen Führungsschräge eine ebene Gleitfläche auf. Hierdurch ist bei Drehung der Spindel in Richtung der Führungsschräge eine anschließende selbsttätige Rückstellung in die Position "ganz geschlossen" erzielt, wobei eine Drehung der Spindel in die entgegengesetzte Richtung ohne selbsttätige Rückstellung erfolgt. Hierdurch ist beispielsweise bei der Entnahme von Heißwasser eine automatische Rückstellung des Ventilkörpers in die Position "ganz geschlossen" und bei der Entnahme von Kaltwasser eine Einstellung einer kontinuierlichen, dauerhaften Abgabemenge ermöglicht. Bevorzugt ist die ebene Gleitfläche an einer Seite durch einen Anschlag begrenzt, der mit einem an der Steuerhülse angeordneten Anschlag zusammenwirkt.

In Weiterbildung der Erfindung mündet die wenigstens eine Führungsschräge der Steuerkontur in eine Einkerbung, in die in Grundstellung des Ventilkörpers eine an ihren dem Kopfstück zugewandten Ende der schrägen Führungskante angeordnete Nase eingreift. Hierdurch ist eine mechanische Arretierung der Steuerhülse und damit auch der Spindel in der Position "ganz geschlossen" erzielt.

In weiterer Ausgestaltung der Erfindung sind außerhalb der Steuerkontur innerhalb des Kopfstücks zwei Anschlagflächen angeordnet, die mit einem an der Spindel angeordneten Vorsprung derart korrespondieren, dass eine beidseitige Drehbegrenzung der Spindel bewirkt ist. Hierdurch ist ein definierter Drehbereich der Spindel innerhalb des Kopfstücks erzielt.

In Ausgestaltung der Erfindung ist an der Spindel eine radial zumindest bereichsweise umlaufende Anschlagkante angeordnet, an der die Feder mit ihrem dem Kopfstück abgewandten Ende anliegt. Die Anschlagkante kann beispielsweise durch einen in einer Nut der Spindel angebrachten Sprengring, einen an die Spindel angeformten Absatz oder auch durch eine an einem auf der Spindel montierten Drehgriff befindliche Anschlagfläche gebildet sein. Vorteilhaft ist die Anschlagkante durch eine Gewindemutter gebildet, die auf ein an der Spindel angeordnetes Außengewinde aufgeschraubt ist. Hierdurch ist eine Einstellung der Vorspannkraft der anliegenden Feder durch axiale Bewegung der Gewindemutter ermöglicht.

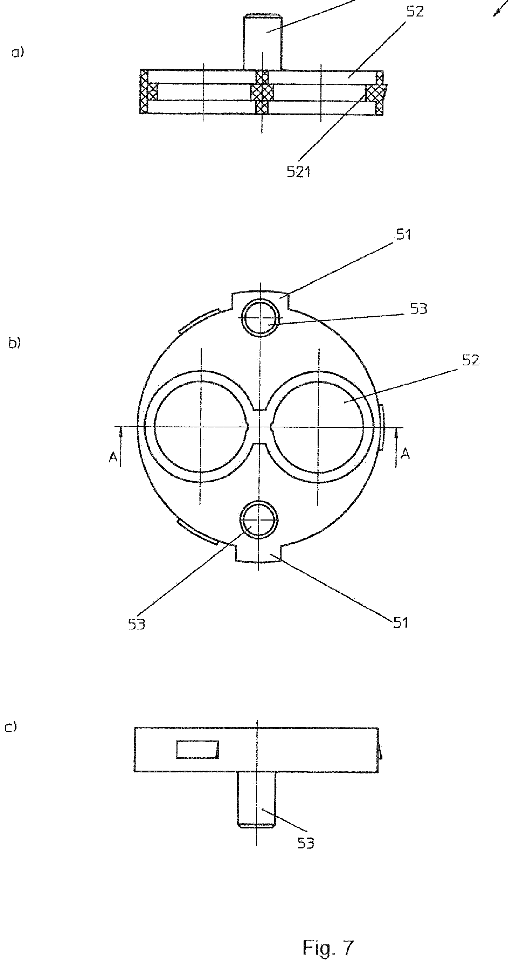

Andere Weiterbildungen und Ausgestaltungen der Erfindung sind in den übrigen Unteransprüchen angegeben. Ausführungsbeispiele der Erfindung sind in den Zeichnungen dargestellt und werden nachfolgend im Einzelnen beschrieben. Es zeigen:

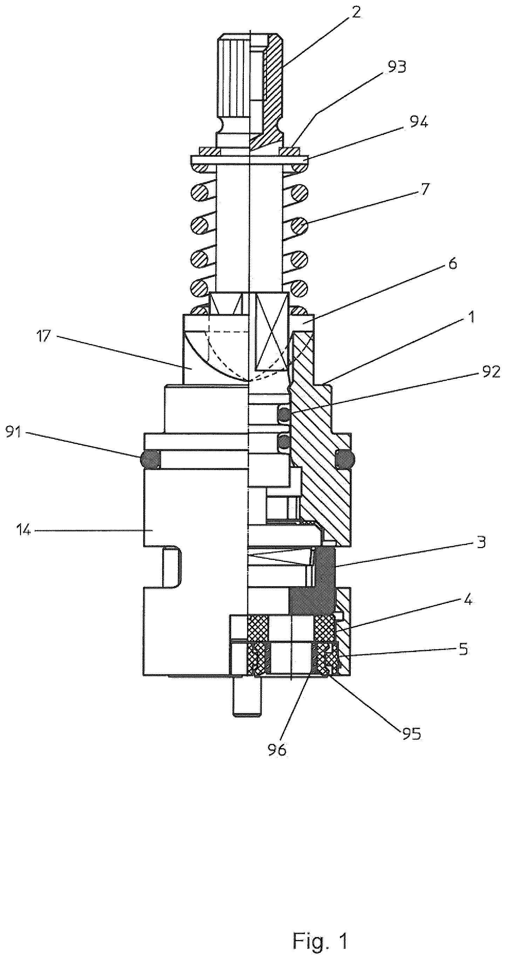

- Figur 1: die schematische Darstellung eines Ventiloberteils im Teilschnitt;

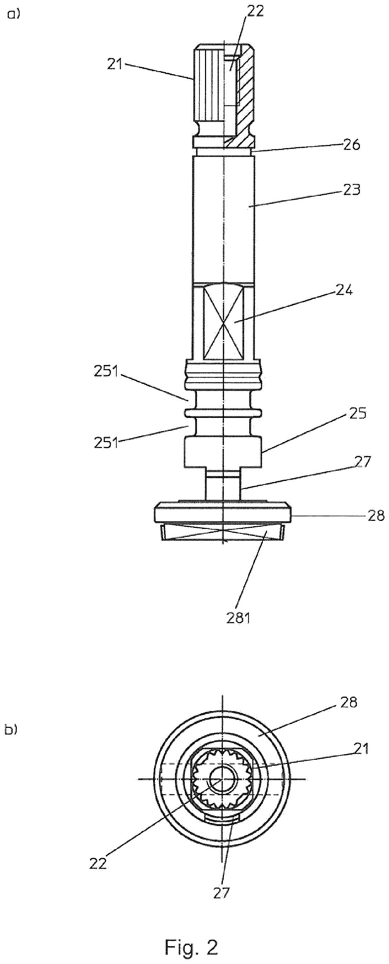

- Figur 2: die Darstellung der Spindel des Ventiloberteils aus Figur 1
a) in Seitenansicht;
b) in der Draufsicht;

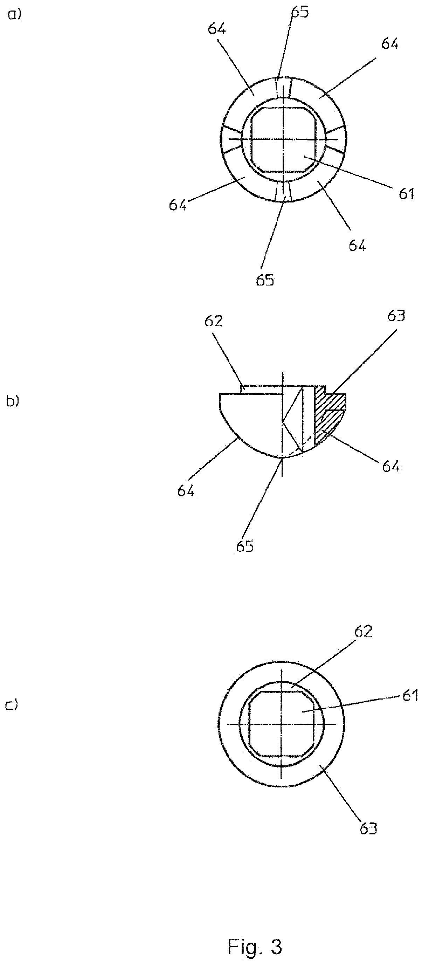

- Figur 3: die Darstellung der Steuerhülse des Ventiloberteils aus Figur 1
a) in der Ansicht von unten;
b) in Seitenansicht im Teilschnitt
c) in der Draufsicht;

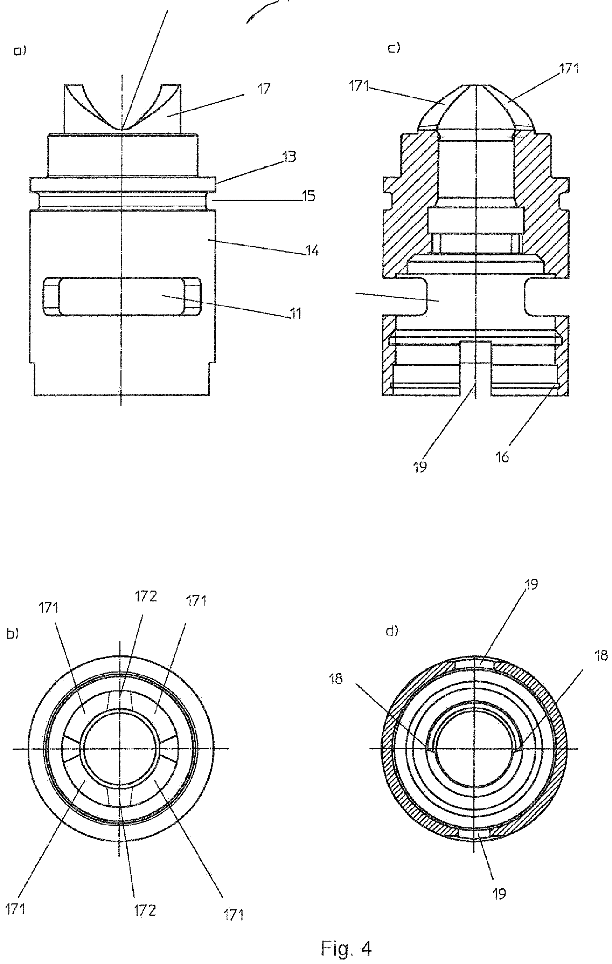

- Figur 4: die Darstellung des Kopfstücks des Ventiloberteils aus Figur 1
a) in Seitenansicht;
b) in der Draufsicht;
c) um 90° verdreht in Schnittdarstellung;
d) in Querschnittsansicht von unten;
- Figur 5: die Darstellung der Steuerscheibe des Ventiloberteils aus Figur 1
a) in der Ansicht von unten;
b) im Axialschnitt;
c) in der Draufsicht;

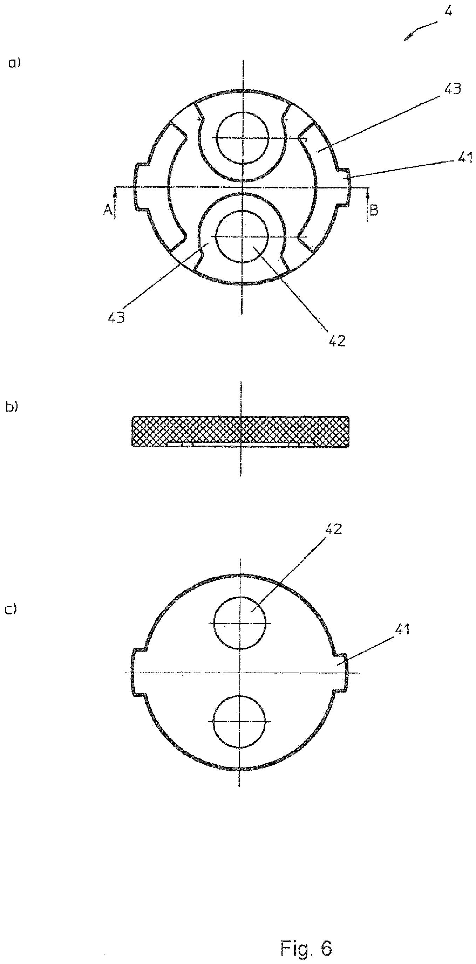

- Figur 6: die Darstellung der Einlassscheibe des Ventiloberteils aus Figur 1
a) in der Draufsicht;
b) im Querschnitt
c) in der Ansicht von unten
- Figur 7: die Darstellung der Anschlussscheibe des Ventiloberteils aus Figur 1
a) im Querschnitt;
b) in der Ansicht von unten;
c) in der Seitenansicht;

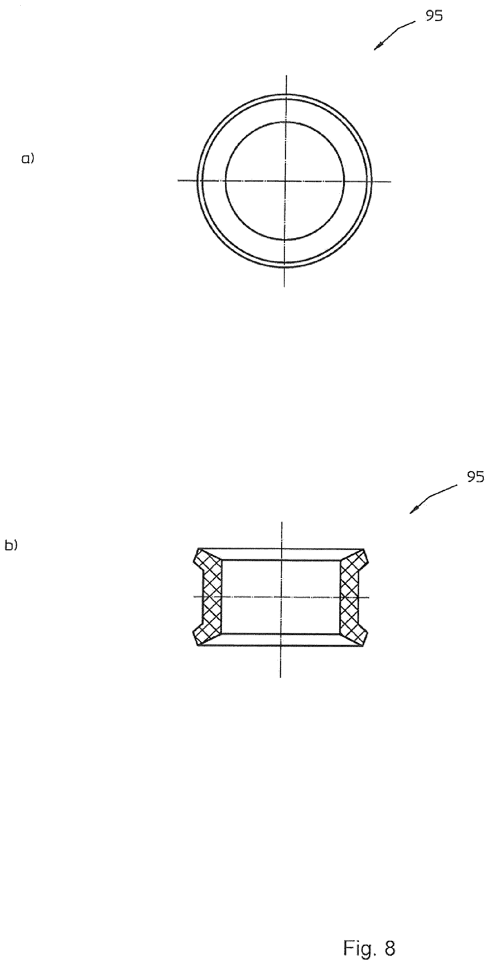

- Figur 8: die Darstellung der Lippendichtungen der Anschlussscheibe des Ventiloberteils aus Figur 1
a) in der Draufsicht;
b) im Querschnitt;

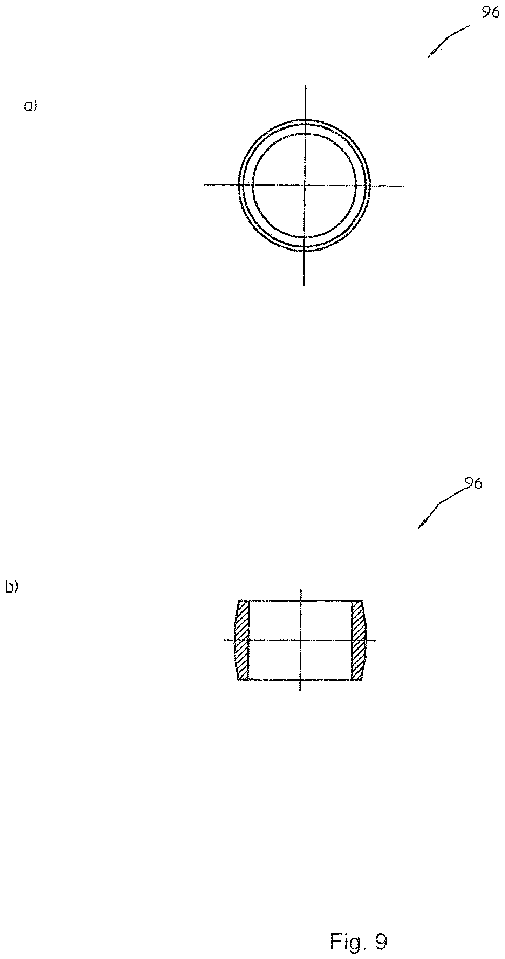

- Figur 9: die Darstellung des Stützrings der Anschlussscheibe des Ventiloberteils aus Figur 1
a) im Querschnitt;
b) in der Draufsicht;
- Figur 10: die schematische Darstellung eines Ventiloberteils in einer weiteren Ausführungsform;
- Figur 11: die Darstellung der Steuerhülse des Ventiloberteils aus Figur 10
a) in der Ansicht von unten;
b) in der Seitenansicht;
c) in der Draufsicht;
- Figur 12: die Darstellung des Kopfteils des Ventiloberteils aus Figur 10
a) in der Seitenansicht;
b) in der Draufsicht;
c) um 90° verdreht im Querschnitt;
d) in einer Querschnittsansicht von unten
- Figur 13: die schematische Darstellung eines Ventiloberteils in einer dritten Ausführungsform.

Das als Ausführungsbeispiel gewählte Ventiloberteil weist ein Kopfstück 1 auf, das von einer in ihm radial geführten Spindel 2 mittig durchsetzt ist. Mit der Spindel 2 ist eine Steuerscheibe 3 formschlüssig verbunden und im Kopfstück 1 radial geführt. An dem der Spindel 1 abgewandten Seite der Steuerscheibe 3 ist eine Einlassscheibe 4 in dem Kopfstück 1 vorgesehen, an die sich eine Anschlussscheibe 5 anschließt, die mit dem Ventilsitz einer - nicht dargestellten - Armatur zur Anlage kommt. Weiterhin ist das Ventiloberteil mit einer Steuerhülse 6 versehen, die von der Spindel 2 mittig durchsetzt ist und die über eine Feder 7 gegen das Kopfstück 1 vorgespannt ist.

Das Kopfstück 1 besteht aus einem symmetrischen Hohlkörper, dessen beide Stirnflächen offen sind. Auf seiner der Armatur zugewandten Seite weist das Kopfstück 1 einen hülsenförmigen Teil 14 auf. In dem hülsenförmigen Teil 14 sind Durchtrittsfenster 11 vorgesehen, die von Längsstegen 12 begrenzt sind. Im Ausführungsbeispiel sind zwei durch Längsstege 12 begrenzte Fenster 11 angeordnet. Nach dem Einbringen des Kopfstücks 1 in eine Armatur liegt ein Bund 13 des Kopfstücks 1 auf dem Gehäuse der Armatur auf. Der Bund 13 weist auf seiner dem Durchtrittsfenster 11 zugewandten Seite eine Ringnut 15 zur Aufnahme eines O-Rings 91 auf. In dem hülsenförmigen Teil 14 ist innen im Bereich des dem Ventilsitz zugewandten Ende eine Hinterdrehung 16 angeordnet.

An seinem dem Durchtrittsfenster 11 entgegengesetzten Ende ist in das Kopfstück 1 eine Steuerkontur 17 angeformt. Die Steuerkontur 17 weist gegenüberliegend jeweils zwei in entgegengesetzte Richtungen ansteigende Führungsschrägen 171 auf, die in eine Einkerbung 172 münden. Im Bereich des Bundes 13 sind weiterhin in dem Kopfstück 1 innen gegenüberliegend zwei Anschläge 18 zur Drehbegrenzung der Spindel 2 angeformt.

Die Spindel 2 ist im Wesentlichen massiv ausgeführt. Sie ist an ihrer dem Wasserzulauf abgewandten Stirnseite außen als Außenvielkant 21 ausgeführt und mit einem Sackloch 22 mit Innengewinde für die Befestigung eines Drehgriffs 8 versehen. Anschließend ist außen an der Spindel 2 eine Zylinderfläche 23 vorgesehen, an die sich ein Vierkantabschnitt 24 anschließt. Der Vierkantabschnitt 24 geht in einen zylindrischen Abschnitt 25 über, mit dem die Spindel 2 in dem Kopfstück 1 radial geführt ist und in dem zwei Ringnuten 251 zur Aufnahme von Ringen 92 eingebracht sind. Die O-Ringe 92 dichten die Spindel 2 gegen das Kopfstück 1 ab.

An den zylindrischen Abschnitt 25 ist axial ein Ausleger 27 angeformt, der im Wesentlichen einen rechteckigen Querschnitt aufweist und an einer Seite über den Durchmesser des zylindrischen Abschnitts 25 hinaus ragt. Der Ausleger 27 ist derart ausgebildet, dass er in den definierten Positionen "Zuleitung 1 vollständig geöffnet" und "Zuleitung 2 vollständig geöffnet" an dem innerhalb des Kopfstücks 1 angeformten Anschlag 18 mit einer Seitenfläche anliegt. An den Ausleger 27 ist eine Scheibe 28 angeformt, die auf ihrer der Armatur zugewandten Seite einen Mitnehmer 281 aufweist.

Zwischen der Zylinderfläche 23 und dem Außenvielkant 21 ist ein Einstich 26 eingebracht, in dem ein Sprengring 93 eingelegt ist. Der Sprengring 93 dient der Anlage einer Scheibe 94, an der die Schraubenfeder 7 anliegt, die gegen die Steuerhülse 6 vorgespannt ist.

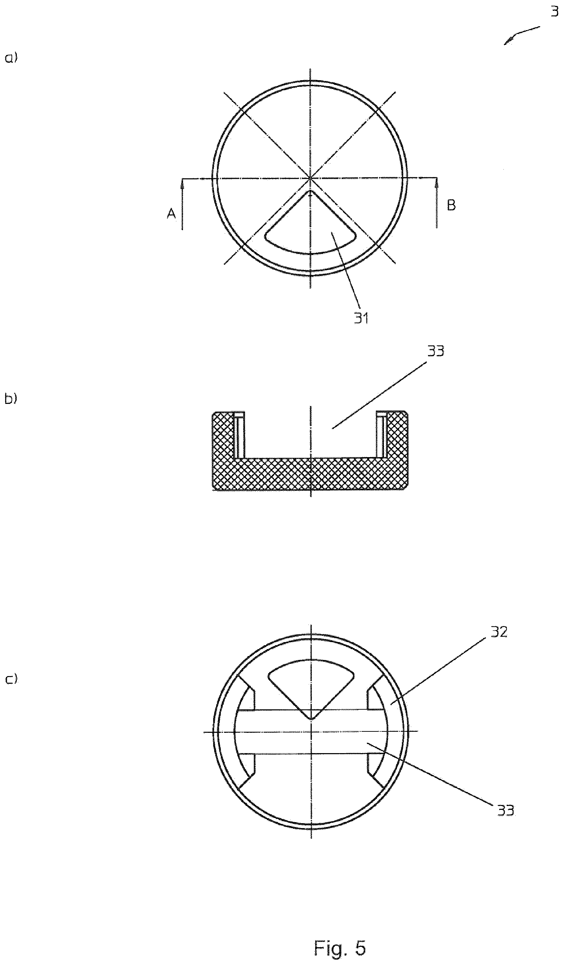

Die Steuerscheibe 3 ist im Wesentlichen als kreisrunde Scheibe ausgebildet, aus der ein Kreisausschnitt 31 ausgenommen ist. Der Kreisausschnitt 31 weist im Ausführungsbeispiel einen Winkel von ca. 90° auf Auf ihrer der Spindel 2 zugewandten Seite weist die Steuerscheibe 3 zwei diametral zueinander angeordnete bogenförmige Absätze 32 auf. Der ringförmige Absatz 32 umfasst im montierten Zustand den Mitnehmer 281 der Spindel 2. An den Absätzen 32 sind Ausnehmungen 33 ausgebildet, in die der Mitnehmer 281 eingreift (vgl. Figur 5 c)).

Die Einlassscheibe 4 weist auf ihrem Umfang 2 sich gegenüberliegende Nasen 41 auf. Mit den Nasen 41 fasst die Scheibe 4 in Ausnehmungen 19, die hierzu in dem hülsenförmigen Teil 14 des Kopfstücks 1 vorgesehen sind. Die Einlassscheibe 4 ist damit drehfest in dem Kopfstück 1 angeordnet. Die Einlassscheibe 4 weist zwei kreisrunde, diametral zueinander angeordnete Durchtrittsöffnungen 42 auf. Außen sind umlaufend der Durchtrittsöffnungen 42 sowie im Bereich der Nasen 41 auf der armaturseitigen Unterseite der Einlassscheibe 4 stegartige Konturen 43 angeformt.

Die Anschlussscheibe 5 ist im Ausführungsbeispiel aus Kunststoff dargestellt. Sie weist auf ihrem Umfang ebenfalls zwei sich diametral gegenüberliegende Nasen 51 auf. Mit den Nasen 51 fasst die Anschlussscheibe 5 in Ausnehmungen 19, die hierzu in dem hülsenförmigen Teil 14 des Kopfstücks 1 vorgesehen sind. Die Anschlussscheibe 5 ist damit drehfest in dem Kopfstück 1 angeordnet. Die Anschlussscheibe 5 weist zwei kreisrunde, diametral zueinander angeordnete Durchtrittsöffnungen 52 auf, welche mit den Durchtrittsöffnungen 42 der Einlassscheibe 4 fluchten. In den Durchtrittsöffnungen 52 ist innen umlaufend jeweils ein Steg 521 zur Aufnahme einer Lippendichtung 95 angeformt. Die Lippendichtung 95 ist über einen eingebrachten Stützring 96 in der Durchtrittsöffnung 52 gehalten. In montiertem Zustand liegen die Lippen der Lippendichtung 95 dichtend gegen die Durchlassscheibe 4 sowie gegen den - nicht dargestellten - Armatursitz an. Weiterhin sind außen auf der armaturseitigen Unterseite der Anschlussscheibe 5 gegenüberliegend zwei zylinderförmige Stifte 53 angeformt. Die Stifte 53 dienen der Positionierung des Ventiloberteils in der - nicht dargestellten - Armatur.

Die Steuerhülse 6 ist im Wesentlichen hohlzylindrisch ausgebildet. Sie weist eine im Wesentlichen vierkantförmige axiale Durchführung 61 auf, die an ihrem den Kopfstück 1 abgewandten Ende von einem Kragen 62 begrenzt ist, an den sich eine Ringfläche 63 anschließt. Die Ringfläche 63 bildet gemeinsam mit dem Kragen 62 eine Aufnahme für die Schraubenfeder 7. An ihrer der Ringfläche 63 gegenüberliegenden Unterseite sind in die Steuerhülse 6 gegenüberliegend jeweils zwei in entgegengesetzte Richtungen ansteigende schräge Führungskanten 64 eingebracht, wobei jeweils zwei Führungskanten 64 an ihrem dem Kopfstück 1 zugewandten Maximum eine Nase 65 ausbilden, die mit einer Einkerbung 172 der Steuerkontur 17 des Kopfstücks 1 korrespondieren. Die Führungskanten 64 sind derart ausgebildet, dass sie mit den Führungsschrägen 171 der Steuerkontur 17 des Kopfstücks 1 derart zusammenwirken, dass die Steuerhülse 6 bei einer relativen Drehung gegenüber dem Kopfstück 1 mit ihren Führungskanten 64 an den Führungsschrägen 171 der Steuerkontur 17 entlang gleitet und eine axiale Verschiebung entlang der Spindel 2 vollzieht.

Die so ausgebildete Steuerhülse liegt in der Position "ganz geschlossen" mit ihren Führungskanten 64 an den Führungsschrägen 171 der Steuerkontur 17 des Kopfstücks 1 an. Dabei ist die vierkantförmige Durchführung 61 von dem Vierkantabschnitt 24 der Spindel 2 durchdrungen. Die Schraubenfeder 7 liegt auf der Ringfläche 63 den Kragen 62 umgebend an der Steuerhülse 6 an und ist zwischen Steuerhülse 6 und der Scheibe 94, die über den Sprengring 93 an der Spindel 2 axial gehalten ist, vorgespannt.

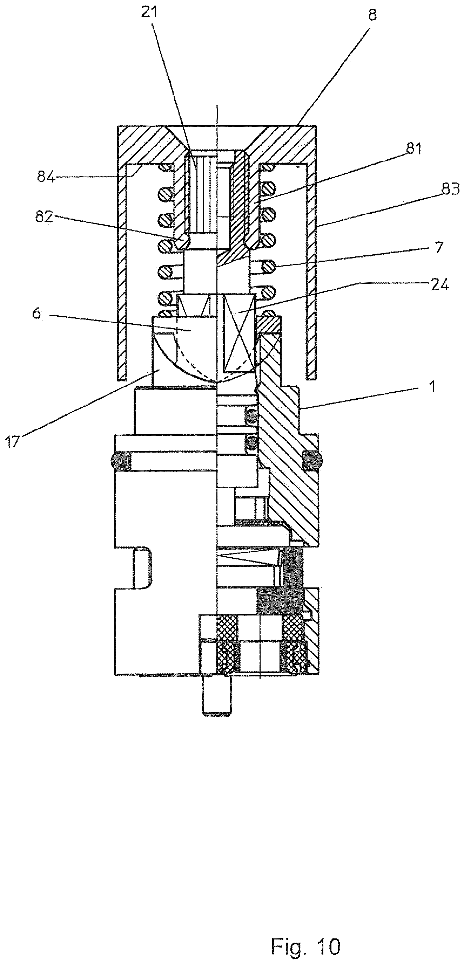

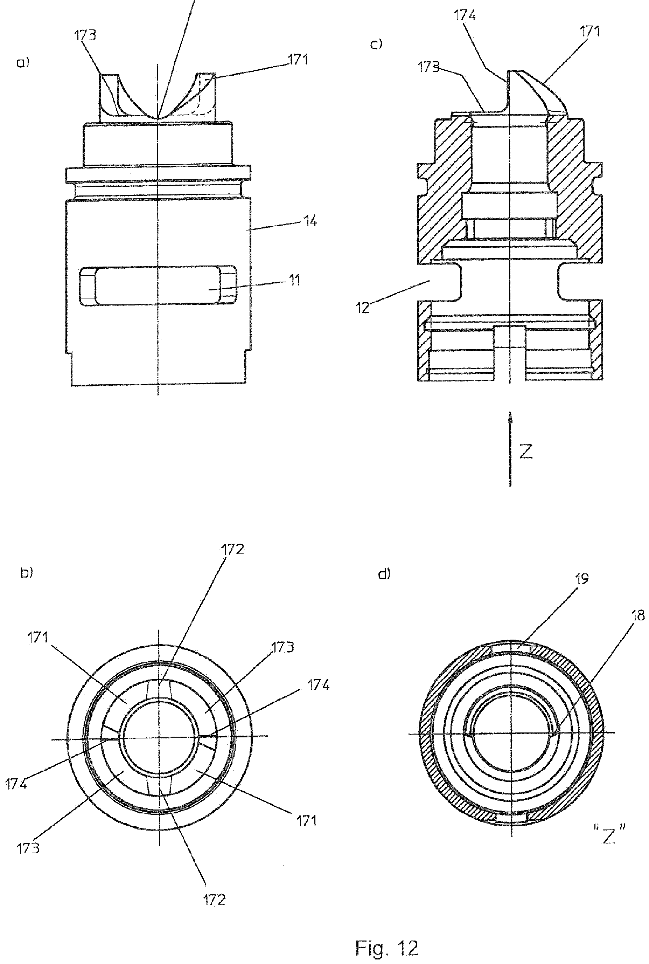

Im Ausführungsbeispiel gemäß Figur 10 ist die Steuerkontur 17 des Kopfstücks 1 derart ausgebildet, dass sie gegenüberliegend jeweils eine Führungsschräge 171 aufweist, an die sich jeweils eine ebene Gleitfläche 173 anschließt. Zwischen der Führungsschräge 171 und der Gleitfläche 173 ist jeweils eine Einkerbung 172 angeordnet. Die ebenen Gleitflächen 173 sind jeweils durch einen Anschlag 174 begrenzt, der am Ende der jeweils anderen Führungsschräge 171 angeordnet ist (vgl. Figur 12).

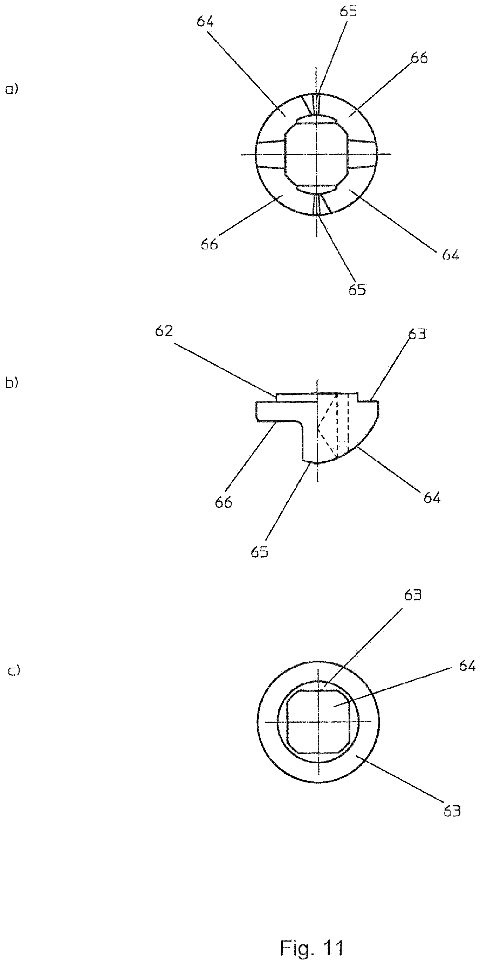

Die Steuerhülse 6 ist weitgehend spiegelgleich zur Steuerkontur 17 des Kopfstücks 1 ausgebildet. Es ist gegenüberliegend jeweils eine Führungskante 62 angeordnet, an die sich eine zurückversetzte ebene Kante 66 anschließt. Dabei ist an dem jeweiligen dem Kopfstück zugewandten Maximum der Führungskanten 64 jeweils eine Nase 65 ausgebildet, die mit einer Einkerbung 172 der Steuerkontur 17 des Kopfstücks 1 korrespondiert (vgl. Figur 11). An die Nase 65 schließt sich eine Anschlagskante 67 an, die im Wesentlichen orthogonal zur ebenen Kante 66 ausgerichtet ist und die mit dem Anschlag 174 der Steuerkontur 17 korrespondiert.

Weiterhin ist im Ausführungsbeispiel gemäß Figur 10 auf der Spindel 2 ein Drehgriff 8 angebracht. Der Drehgriff 8 ist weitgehend becherförmig ausgebildet. Mittig ist innen in dem Drehgriff 8 ein hülsenförmiger Kragen 81 angeformt, auf dessen Innenseite ein Innenvielkant eingeformt ist und dessen freie Außenkante mit nach innen ragenden Rastnasen 82 versehen ist. Der Drehgriff 8 ist derart auf der Spindel montiert, dass der Außenvielkant 21 der Spindel 2 in dem Innenvielkant des hülsenartigen Kragens 81 liegt, wobei die umlaufenden Rastnasen 82 in den Einstich 26 der Spindel 2 eingreifen, wodurch der Drehgriff 8 axial an der Spindel 2 fixiert ist. Zwischen der umlaufenden Seitenwand 83 des Drehgriffs und dem hülsenförmigen Kragen 81 ist eine Anlagefläche 84 zur Anlage der Schraubenfeder 7 gebildet, die so zwischen der Anlagefläche 84 und der Ringfläche 63 der Steuerhülse 6 vorgespannt ist und die Steuerhülse 6 gegen die Steuerkontur 17 des Kopfstücks 1 drückt.

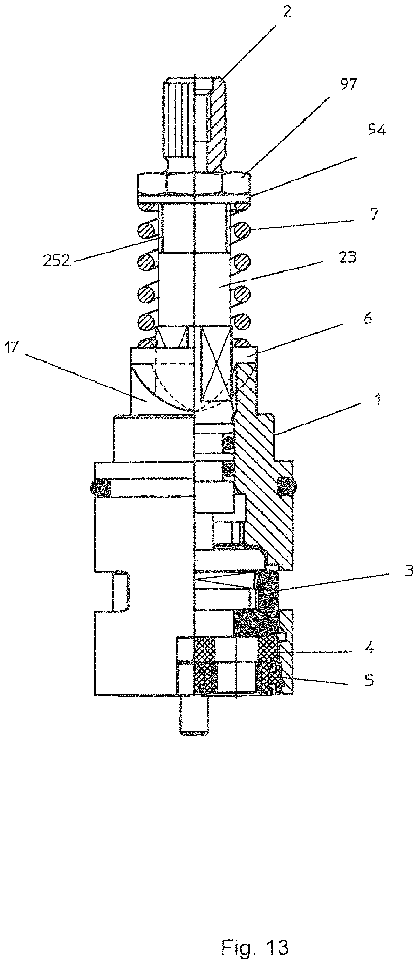

Im Ausführungsbeispiel gemäß Figur 13 ist in den zylindrischen Abschnitt 25 der Spindel 2 an seinen dem Außenvielkant 21 zugewandten Ende ein Außengewinde 252 eingebracht, auf das eine Mutter 97 aufgeschraubt ist. An ihrer dem Kopfstück 1 zugewandten Unterseite liegt an der Mutter 97 eine Scheibe 94 an, die der Anlage der Schraubenfeder 7 dient, welche zwischen der Scheibe 94 und der Steuerhülse 6 vorgespannt ist. Durch Drehung der Mutter 97 entlang des Außengewindes 251 der Spindel 2 ist die Vorspannung der Schraubenfeder 7 einstellbar.

## Patentansprüche

1. Ventiloberteil mit einem Kopfstück (1), das von einer Spindel (2) mittig durchsetzt ist, die in dem Kopfstück (1) um ihre Längsachse drehbar gelagert ist und über die ein Ventilkörper betätigbar ist, der durch eine Steuerscheibe (3) gebildet ist, die mit der Spindel (2) formschlüssig verbunden und über diese gegenüber einer in dem Kopfstück (1) drehfest angeordneten Einlassscheibe (4) drehbar ist, **dadurch gekennzeichnet, dass** die Spindel (2) mit einer Steuerhülse (6) versehen ist, die mit einer an dem Kopfstück (1) angeordneten Steuerkontur (17) derart zusammenwirkt, dass nach Betätigung des Ventilkörpers über die Spindel (2) in eine definierte Richtung eine selbsttätige Rückstellung des Ventilkörpers in eine Grundstellung bewirkt ist.

2. Ventiloberteil nach Anspruch 1, **dadurch gekennzeichnet, dass** die Steuerhülse (6) mit der Spindel (2) über einen Formschluss axial verschiebbar verbunden ist.

3. Ventiloberteil nach Anspruch 2, **dadurch gekennzeichnet, dass** die Steuerhülse (6) eine unrunde, insbesondere mehrkantförmige axiale Durchführung (61) aufweist, durch die ein an der Spindel (2) angeordneter unrunder, insbesondere mehrkantförmiger Abschnitt (24) hindurchtritt.

4. Ventiloberteil nach Anspruch 2 oder 3, dadurch gekenntzeichnet, dass die Steuerhülse (6) über eine Feder (7) gegen das Kopfstück (1) vorgespannt ist.

5. Ventiloberteil nach Anspruch 4, **dadurch gekennzeichnet, dass** die Steuerhülse (6) wenigstens eine schräge Führungskante (64) aufweist, die an einer Führungsschräge (171) der Steuerkontur (17) anliegt, derart, das bei Drehung der Steuerhülse (6) in eine definierte Richtung eine axiale Verschiebung der Steuerhülse (6) entgegen der Vorspannung der Feder (7) erfolgt.

6. Ventiloberteil nach Anspruch 5, **dadurch gekennzeichnet, dass** die Steuerhülse (6) wenigstens zwei in entgegengesetzte Richtungen ansteigende schräge Führungskanten (64) aufweist, die an zwei in entgegengesetze Richtungen ansteigende Führungsschrägen (171) der Steuerkontur (17) anliegen, derart, das bei Drehung der Steuerhülse (6) in eine beliebige Richtung eine axiale Verschiebung der Steuerhülse (6) entgegen der Vorspannung der Feder (7) bewirkt ist.

7. Ventiloberteil nach Anspruch 5, **dadurch gekennzeichnet, dass** die Steuerkontur (17) benachbart der wenigstens einen Führungsschräge (171) eine ebene Gleitfläche (173) aufweist.

8. Ventiloberteil nach Anspruch 7, **dadurch gekennzeichnet, dass** die ebene Gleitfläche (173) an einer Seite durch einen Anschlag (174) begrenzt ist, der mit einem an der Steuerhülse (6) angeordneten Anschlag (67) zusammenwirkt.

9. Ventiloberteil nach einem der Ansprüche 5 bis 8, **dadurch gekennzeichnet, dass** die wenigstens eine Führungsschräge (171) der Steuerkontur (17) in eine Einkerbung (172) mündet, in die in Grundstellung des Ventilkörpers eine an ihrem dem Kopfstück (1) zugewandten Ende der schrägen Führungskante (64) angeordnete Nase (65) eingreift.

10. Ventiloberteil nach einem der vorgenannten Ansprüche, **dadurch gekennzeichnet, dass** außerhalb der Steuerkontur (17) innerhalb des Kopfstücks (1) zwei Anschläge (18) angeordnet sind, die mit einem an der Spindel (2) angeordneten Ausleger (27) derart korrespondieren, dass eine beidseitige Drehbegrenzung der Spindel (2) bewirkt ist.

11. Ventiloberteil nach einem der Ansprüche 4 bis 10, **dadurch gekennzeichnet, dass** an der Spindel (2) eine radial zumindest bereisweise umlaufende Anschlagkante angeordnet ist, an der die Feder (7) mit ihrem dem Kopfstück (1) abgewandten Ende anliegt.

12. Ventiloberteil nach Anspruch 11, **dadurch gekennzeichnet, dass** die Anschlagkante durch eine Mutter (97) gebildet ist, die auf ein an der Spindel (2) angeordnetes Außengewinde (252) aufgeschraubt ist.

## Claims

1. Valve top having a head part (1) through the centre of which runs a spindle (2) that is mounted rotatably about its longitudinal axis in the head part (1) and by means of which a valve body that is formed by a control disk (3) that is positively connected to the spindle (2) and can be rotated by means of this spindle (2) can be actuated relative to an inlet disk (4) co-rotatably arranged in the head part (1), **characterised in that** the spindle (2) is provided with a control sleeve (6) that coacts in such a way with a control profile (17) arranged on the head part (1) that after being actuated in a defined direction by the spindle (2) the valve body is caused to return automatically to its home position.

2. Valve top in accordance with claim 1, **characterised in that** the control sleeve (6) is axially displaceably connected to the spindle (2) by a positive connection.

3. Valve top in accordance with claim 2, **characterised in that** the control sleeve (6) has a non-round, preferably polygonal axial opening (61) through which passes a non-round, preferably polygonal section (24) arranged on the spindle (2).

4. Valve top in accordance with claim 2 or claim 3, **characterised in that** the control sleeve (6) is pre-tensioned against the head part (1) by a spring (7).

5. Valve top in accordance with claim 4, **characterised in that** the control sleeve (6) has at least one oblique guiding edge (64) which lies against a guide bevel (171) of the control contour (17) in such a way that when the control sleeve (6) is rotated in a defined direction, the control sleeve (6) moves axially against the pretension of the spring (7).

6. Valve top in accordance with claim 5, **characterised in that** the control sleeve (6) has at least two oblique guiding edges (64) sloping in opposite directions which lie against two guide bevels (171) of the control profile (17) of the guide sleeve (5) which slope in opposite directions, in such a way that when the control sleeve (6) is rotated in any direction, the control sleeve (6) moves axially against the pretension of the spring (7).

7. Valve top in accordance with claim 5, **characterised in that** the control profile (17) adjacent to the at least one guide bevel (171) has a flat sliding surface (173).

8. Valve top in accordance with claim 7, **characterised in that** the flat sliding surface (173) is delimited on one side by a stop (174) which interacts with a stop (67) arranged on the control sleeve (6).

9. Valve top in accordance with any of the claims 5 to 8, **characterised in that** the at least one guide bevel (171) of the control profile (17) opens into a notch (172), into which a tappet (65) arranged at the end of the oblique guiding edge (64) facing the head part (1) engages when the valve body is in its starting position.

10. Valve profile in accordance with any one of the foregoing claims, **characterised in that** outside the control profile (17) and inside the head part (1) two stops (18) that fit with a projecting member (27) that are arranged on the spindle (2) in such a way that rotation of the spindle (2) is limited on both sides.

11. Valve top in accordance with any one of claims 4 to 10, **characterised in that** a radially at least partly circumferential stop edge against which lies the spring (7) with its end oriented away from the head part (1) is arranged on the spindle (2).

12. Valve top in accordance with claim 11, **characterised in that** the stop edge is formed by a nut (97) that is screwed onto an external thread (252) arranged on the spindle (2).

## Revendications

1. Partie supérieure de soupape avec pièce têtière (1) traversée en son centre par une broche (2) en appui lui permettant de tourner sur son axe longitudinal dans la pièce têtière (1), broche qui permet d'actionner un corps de soupape formé par un disque de commande (3) relié par adhérence de formes avec la broche (2) et via laquelle il peut tourner par rapport à un disque d'admission (4) placé dans la pièce têtière (1) et ne pouvant pas tourner, **caractérisée en ce que** la broche (2) est munie d'une douille de commande (6) qui interagit avec un contour de commande (17) disposé contre la pièce têtière (1) de sorte qu'après avoir actionné le corps de soupape via la broche (2) dans une direction définie, un rappel automatique du corps de vanne jusque sur une position de base est provoqué.

2. Partie supérieure de soupape selon la revendication 1, **caractérisée en ce que** la douille de commande (6) est, par adhérence de formes, reliée avec la broche (2) d'une façon permettant un déplacement axial.

3. Partie supérieure de soupape selon la revendication 2, **caractérisée en ce que** la douille de commande (6) présente un passage axial (61) en faux-rond, en particulier polygonal, que traverse en l'épousant un segment (24) en faux-rond, en particulier polygonal, disposé contre la broche (2).

4. Partie supérieure de soupape selon la revendication 2 ou 3, **caractérisée en ce que** la douille de commande (6) est précontrainte contre la pièce têtière (1) via un ressort (7).

5. Partie supérieure de soupape selon la revendication 4, **caractérisée en ce que** la douille de commande (6) présente au moins une arête de guidage (64) oblique qui applique contre un chanfrein de guidage (171) du contour de commande (17), de sorte que lorsque la douille de commande (6) tourne dans une direction définie, un déplacement axial de la douille de commande (6) a lieu en direction opposée à celle de la précontrainte exercée par le ressort (7).

6. Partie supérieure de soupape selon la revendication 5, **caractérisée en ce que** la douille de commande (6) présente au moins deux arêtes de guidage (64) obliques montant dans des directions opposées, arêtes qui appliquent contre deux chanfreins de guidage (171) - lesquels montent dans des directions opposées - du contour de commande (17), de sorte que lorsque la douille de commande (6) tourne dans une direction quelconque, cela provoque un déplacement axial de la douille de commande (6) en direction opposée à celle de la précontrainte exercée par le ressort (7).

7. Partie supérieure de soupape selon la revendication 5, **caractérisée en ce que** le contour de commande (17) présente une surface de glissement (173) plane au voisinage d'au moins un chanfrein de guidage (171).

8. Partie supérieure de soupape selon la revendication 7, **caractérisée en ce que** la surface de glissement (173) plane est limitée d'un côté par une butée (174) qui interagit avec une butée (67) disposée contre la douille de commande (6).

9. Partie supérieure de soupape selon l'une des revendications 5 à 8, **caractérisée en ce qu'**au moins un chanfrein de guidage (171) du contour de commande (17) aboutit dans une entaille (172), dans laquelle engrène, lorsque le corps de soupape se trouve en position de base, une saillie (65) disposée à son extrémité - regardant la pièce têtière (1) - de l'arête de guidage (64) oblique.

10. Partie supérieure de soupape selon l'une des revendications précédentes, **caractérisée en ce que** deux butées (18) sont disposées en dehors du contour de commande (17), à l'intérieur de la pièce têtière (1), butées qui épousent un segment (27) disposé contre la broche (2) de sorte à permettre une limitation bilatérale de la rotation de la broche (2).

11. Partie supérieure de soupape selon l'une des revendications 4 à 10, **caractérisée en ce que** contre la broche (2) est disposée au moins localement une arête butée périphérique radiale contre laquelle applique le ressort (7) par son extrémité ne regardant pas la pièce têtière (1).

12. Partie supérieure de soupape selon la revendication 11, **caractérisée en ce que** l'arête butée est formée par un écrou (97) vissé sur un filetage externe (252) disposé contre la broche (2).
